# EUROPÄISCHE PATENTANMELDUNG

(11) **EP 0 701 984 A2**
(43) Veröffentlichungstag der Anmeldung: **20.03.1996**
(21) Anmeldenummer: 95111295.2
(22) Anmeldetag: 19.07.1995
(51) Int. Cl.: C07C 7/10, C07B 61/00

(54) **Verfahren zur Herstellung von Alkaliamiden**

(30) Priorität: 17.09.1994 DE 4433148
(71) Anmelder: METALLGESELLSCHAFT AG, D-60323 Frankfurt am Main (DE)
(72) Erfinder: Weiss, Wilfried, Dr., D-61440 Oberursel (DE); Lischka, Uwe, D-60322 Frankfurt am Main (DE); Emmel, Ute, D-65929 Frankfurt am Main (DE)

(57) **Zusammenfassung**

Die Erfindung betrifft ein Verfahren zur Herstellung von Alkaliamiden der allgemeinen Formel M^{I}NR'R'', gelöst in flüssigen, inerten Kohlenwasserstoffen, wobei M^{I} Li, Na oder K, R' eine Trimethylsilyl- oder eine tert.-Butyl- und R'' eine Trimethylsilyl-Gruppe ist. Erfindungsgemäß erfolgt die Herstellung in der Weise, daß ein aktiviertes Alkalimetall in einem flüssigen, inerten Kohlenwasserstoff dispergiert und mit Hexamethyldisilazan oder tert.-Butyltrimethylsilylamin unter Zusatz eines konjugierten Diens umgesetzt wird.

## Beschreibung

Die Erfindung betrifft ein Verfahren zur Herstellung von Alkaliamiden der allgemeinen Formel M^{I}NR'R'', gelöst in flüssigen, inerten Kohlenwasserstoffen, wobei M^{I} Li, Na oder K, R' eine Trimethylsilyl- oder eine tert.-Butyl- und R'' eine Trimethylsilyl-Gruppe ist.

Alkaliamide, die der o.g. allgemeinen Formel entsprechen, werden als selektive Synthesemittel, insbesondere für die Herstellung organischer Zwischenprodukte bei der Produktion von Pharmazeutika, aufgrund ihrer starken Brönstedt-Basizität und ihrer geringen Nucleophilie eingesetzt. Allerdings sind die genannten Alkaliamide bisher nur in etherhaltigen Lösungen verfügbar. Dadurch ist jedoch ihre Anwendung, vor allem bei stereospezifischen Reaktionen, eingeschränkt.

Aus dem Dokument US 2 141 058 ist die Herstellung von Alkalidiorganoamiden durch die direkte Umsetzung von Alkalimetallen mit Organoaminen in Gegenwart eines als Elektronenakzeptor wirkenden Diens bekannt. Die Umsetzung wird in etherischen Lösungen durchgeführt. Eine Weiterentwicklung dieses bekannten Verfahrens wird in dem Dokument US 2 799 705 offenbart. Danach soll es prinzipiell möglich sein, alle Alkaliamide auf die beschriebene Weise auch in inerten, flüssigen Kohlenwasserstoffen herzustellen. Obwohl eine Vielzahl von Verbindungen aufgezählt werden, sind Verbindungen, die der angegebenen allgemeinen Formel entsprechen, nicht erwähnt.

Die Erfindung hat sich die Aufgabe gestellt, ein Verfahren anzugeben, das die Herstellung der genannten Alkaliamide in inerten, flüssigen Kohlenwasserstoffen gestattet.

Erfindungsgemäß wird die Aufgabe dadurch gelöst, daß ein aktiviertes Alkalimetall in einem flüssigen, inerten Kohlenwasserstoff dispergiert und mit Hexamethyldisilazan oder tert.-Butyltrimethylsilylamin unter Zusatz eines konjugierten Diens umgesetzt wird. Überraschenderweise lassen sich die Alkaliamide von tert.-Butyltrimethylsilylamin und Hexamethyldisilazan durch direkte Umsetzung mit den Alkalimetallen in flüssigen, inerten Kohlenwasserstoffen herstellen, wenn aktivierte Alkalimetalle eingesetzt werden. Erfindungsgemäß gehören zu den konjugierten Dienen sowohl aliphatische Diene als auch Arylalkene mit zum Arylrest α-ständiger Doppelbindung. Die konjugierten Diene werden bei der Umsetzung ganz oder teilweise hydriert, und die Hydrierungsprodukte verbleiben im Lösungsmittel.

In vorteilhafter Weise erfolgt die Aktivierung des Alkalimetalls durch Mahlung, durch Zusatz von Alkalihydriden oder Alkoholen mit 3 bis 6 Kohlenstoffatomen oder durch Aufbringen des Alkalimetalls auf einen inerten Träger.

In vorteilhafter Weise wird zur Aktivierung des Alkalimetalls ein tertiärer Alkohol eingesetzt.

Vorzugsweise werden im erfindungsgemäßen Verfahren Styren oder Isopren als conjugierte Diene eingesetzt.

Als vorteilhaft hat es sich weiterhin erwiesen, daß als flüssiger, inerter Kohlenwasserstoff Toluen, Ethylbenzen, Hexan, Cyclohexan, Isopentan oder ein Gemisch dieser Kohlenwasserstoffe eingesetzt wird.

Für bestimmte Anwendungsfälle ist es vorteilhaft, dem flüssigen, inerten Kohlenwasserstoff einen Ether, wie Methyl-tert.-butylether (MTBE), zuzusetzen.

Die erfindungsgemäß hergestellten Alkaliamide sind als Synthesemittel für selektive Deprotonierungs- oder Metallierungsreaktionen geeignet.

Die Erfindung wird in den nachfolgenden Beispielen näher erläutert.

### Beispiel 1

1310 mmol Lithium-Pulver werden mit 0,2 g Lithiumhydrid in 20 ml Toluen über Nacht magnetisch gerührt. Anschließend werden 1300 mmol Hexamethyldisilazan hinzugefügt und die Reaktion durch Zugabe von 2 ml Styren gestartet. Der Reaktionsansatz wird mit 400 ml Toluen verdünnt und auf eine Innentemperatur von 40°C eingeregelt. Innerhalb von 1 bis 2 Stunden werden 650 mmol Styren als 1 : 1 Gemisch mit Toluen zugesetzt. Der Reaktionsverlauf ist deutlich exotherm. Man läßt 1 Stunde nachreagieren, kühlt ab und filtriert über eine G4-Fritte. Es werden 1173 mmol einer klaren, farblosen Lösung des Lithium-bis-(trimethylsilyl)amids erhalten. Die isolierte Ausbeute beträgt 90 %.

### Beispiel 2

11,2 g Natrium werden bei 120°C mit 100 g Natriumchlorid innig vermischt. Das erkaltete Gemisch wird in 600 ml Toluen suspendiert und bei 20 bis 30°C innerhalb von 1,5 Stunden mit einer Mischung aus 500 mmol Hexamethyldisilazan und 250 mmol Styren versetzt. Nach dem Ende der Zugabe wird in der erhaltenen Lösung ein Gehalt von 0,75 mmol/g Natrium und 0,81 mmol/g Amin gefunden. Die Reaktionsausbeute beträgt 98,8 %.

### Beispiel 3

650 mmol Lithium-Pulver werden mit 16,4 mmol Lithiumhydrid und 645 mmol Hexamethyldisilazan 30 Minuten bei Raumtemperatur langsam gerührt. Der Suspension werden anschließend 6,5 mmol tert.-Butanol zugesetzt und nach 15 Minuten die Reaktionsfähigkeit durch Zugabe von 26 mmol Styren geprüft, wobei sich die Reaktionsfähigkeit an dem beobachtbaren Temperaturanstieg ablesen läßt. Die Reaktionsmischung wird durch Zugabe von 200 ml Toluen verdünnt und auf eine Innentemperatur von 40°C eingestellt. Anschließend erfolgt eine erneute Überprüfung der Reaktionsfähigkeit durch Zugabe von 43,2 mmol Styren. Die restliche Styrenmenge, bis zu einer Gesamtmenge von 325 mmol Styren, wird innerhalb von ca. 80 Minuten so zudosiert, daß die Innentemperatur zwischen 40 und 50°C liegt. Nach beendeter Zugabe wird noch 1 Stunde bei 40°C gerührt, dann abkühlen lassen und filtriert. Es wird eine farblose, klare Lösung von Lithium-bis(trimethylsilyl)amid mit einem Gehalt von 1,8 mmol/g erhalten.

## Patentansprüche

1. Verfahren zur Herstellung von Alkaliamiden der allgemeinen Formel
M^{I}NR'R'',
gelöst in flüssigen, inerten Kohlenwasserstoffen, wobei M^{I} Li, Na oder K, R' eine Trimethylsilyl- oder tert.-Butyl- und R'' eine Trimethylsilyl-Gruppe ist, dadurch gekennzeichnet, daß ein aktiviertes Alkalimetall in einem flüssigen, inerten Kohlenwasserstoff dispergiert und mit Hexamethyldisilazan oder tert.-Butyltrimethylsilylamin unter Zusatz eines konjugierten Diens umgesetzt wird.

2. Verfahren nach Anspruch 1, dadurch gekennzeichnet, daß die Aktivierung des Alkalimetalls durch Mahlung, durch Zusatz von Alkalihydriden oder Alkoholen mit 3 bis 6 Kohlenstoffatomen oder durch Aufbringen des Alkalimetalls auf einen inerten Träger erfolgt.

3. Verfahren nach Anspruch 2, dadurch gekennzeichnet, daß ein tertiärer Alkohol zur Aktivierung eingesetzt wird.

4. Verfahren nach einem oder mehreren der Ansprüche 1 bis 3, dadurch gekennzeichnet, daß Styren oder Isopren als konjugiertes Dien eingesetzt wird.

5. Verfahren nach einem oder mehreren der Ansprüche 1 bis 4, dadurch gekennzeichnet, daß als flüssiger, inerter Kohlenwasserstoff Toluen, Ethylbenzen, Hexan, Cyclohexan, Isopentan oder ein Gemisch dieser Kohlenwasserstoffe eingesetzt wird.

6. Verfahren nach Anspruch 5, dadurch gekennzeichnet, daß dem flüssigen, inerten Kohlenwasserstoff ein Ether, wie Methyl-tert.-butylether, zugesetzt wird.

7. Verwendung der Alkaliamide, hergestellt gemäß einem oder mehreren der Ansprüche 1 bis 6 als Synthesemittel für selektive Deprotonierungs- oder Metallierungsreaktionen.
